# EUROPEAN PATENT APPLICATION

(11) **EP 4 654 572 A1**
(43) Date of publication of application: **26.11.2025**
(21) Application number: 23921855.5
(22) Date of filing: 16.02.2023
(51) Int. Cl.: H04N 5/262

(54) **CONTROL METHOD AND APPARATUS AND VEHICLE**

(71) Applicant: Shenzhen Yinwang Intelligent Technologies Co., Ltd., Shenzhen, Guangdong 518110 (CN)
(72) Inventor: YANG, Jinghuan, Shenzhen, Guangdong 518129 (CN); YU, Jiapeng, Shenzhen, Guangdong 518129 (CN)
(74) Representative: MERH-IP Matias Erny Reichl Hoffmann Patentanwälte PartG mbB
(86) International application number: PCT/CN2023/076498
(87) International publication number: WO 2024/168698

(57) **Abstract**

Embodiments of this application provide a control method and apparatus, and a transportation means. The method may be applied to the field of intelligent cockpits. The method includes: obtaining sensor data when an input from a user in a cockpit for indicating to generate an image is detected, where the sensor data includes a first image acquired by a camera of the transportation means or a speech signal acquired by a microphone of the transportation means; and controlling, based on the sensor data, a display area in the transportation means to display a second image. Embodiments of this application may be applied to an intelligent vehicle or an electric vehicle, to help improve a degree of personalization of content displayed in the cockpit, so as to help improve use experience of the user.

## Description

### TECHNICAL FIELD

Embodiments of this application relate to the field of intelligent cockpits, and more specifically, to a control method and apparatus, and a transportation means.

### BACKGROUND

Currently, there are increasingly more displays in a vehicle cockpit, and content (for example, wallpapers) displayed on the displays is increasingly homogeneous. How to improve a degree of personalization of the content displayed on the displays becomes an urgent problem to be resolved.

### SUMMARY

This application provides a control method and apparatus, and a transportation means, to help improve a degree of personalization of content displayed in a cockpit, so as to help improve use experience of the user.

The transportation means in this application may include a road transportation means, a water transportation means, an air transportation means, an industrial device, an agricultural device, an entertainment device, or the like. For example, the transportation means may be a vehicle. The vehicle is a vehicle in a broad sense, and may be a transportation tool (for example, a commercial vehicle, a passenger vehicle, a motorcycle, a flight vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), an amusement device, a toy vehicle, or the like. A type of the vehicle is not specifically limited in embodiments of this application. For another example, the transportation means may be a transportation means like an aircraft or a ship.

According to a first aspect, this application provides a control method, where the method is applied to a cockpit of a transportation means, the cockpit includes a first display area, and the method includes: obtaining sensor data when an input from a first user in the cockpit for indicating to generate an image is detected, where the sensor data includes a first image acquired by a camera of the transportation means or a first speech signal acquired by a microphone of the transportation means; and controlling, based on the sensor data, the first display area to display a second image.

Based on the foregoing technical solution, the transportation means may re-create data acquired by the camera or the microphone, to control the first display area to display the second image. In this way, the user may view, in the display area in the cockpit, the image created based on locally obtained content, so that visual fatigue caused to the user by displaying a single and homogeneous image in the display area can be avoided, visual perception of the user and a degree of personalization of content displayed in the cockpit can be improved, and driving experience of the user can be improved.

When the first image includes the image acquired by the camera in the cockpit, a problem that a selfie or a group photo effect is poor due to a single camera arrangement position in the cockpit or a single landscape background in the cockpit can be resolved, so that a shooting effect in the cockpit and shooting fun of the user can be improved.

In some possible implementations, the first display area is a display area on a display in the cockpit of the transportation means. For example, if the transportation means is a vehicle, the first display area may be a display area on a central display in the vehicle cockpit.

In some possible implementations, an area in which the first user is located is associated with the first display area.

For example, the transportation means is a vehicle. If the first user is located in a driver area, the first display area may be a display area on a central display, or the first display area may be a display area that is on a central display and that is close to the driver area.

In some possible implementations, that the input from the first user in the cockpit for indicating to generate the image is detected includes that a speech instruction given by the first user is detected, where the speech instruction indicates to generate an image.

In some possible implementations, before the input from the first user in the cockpit for indicating to generate the image is detected, the method further includes: controlling the first display area to display a first interface, where the first interface includes a control, and the control is a control for generating an image; and that the input from the first user in the cockpit for indicating to generate the image is detected includes that an operation of tapping the control by the user is detected.

In some possible implementations, the method further includes: setting the second image as a wallpaper in the first display area.

In some possible implementations, controlling, based on the sensor data, the first display area to display the second image includes: generating the second image based on the sensor data; and controlling the first display area to display the second image.

In some possible implementations, the first image may be one or more frames of images.

In some possible implementations, the second image may be a photo (for example, a wallpaper), an animation (for example, an animation in a graphics interchange format (graphics interchange format, GIF)), a video, or the like.

With reference to the first aspect, in some implementations of the first aspect, the sensor data includes the first speech signal, and controlling, based on the sensor data, the first display area to display the second image includes: controlling, based on feature information of the first speech signal, the first display area to display the second image, where the feature information of the first speech signal includes at least one of a pitch, a timbre, and a tone of the first speech signal.

Based on the foregoing technical solution, after the speech signal acquired by the microphone is obtained, the second image may be obtained based on the feature information of the speech signal. In this way, the user may view, in the display area in the cockpit, the image created based on the feature information of the speech signal given by the user, so that visual fatigue caused to the user by displaying a single and homogeneous image in the display area can be avoided, visual perception of the user and a degree of personalization of content displayed in the cockpit can be improved, and driving experience of the user can be improved.

In addition, based on the feature information of the speech signal, a finally generated image may better meet an expectation of the user. For example, when it is detected that a timbre of a speech signal is a voice of an elderly person or a voice of a child, a final image may be generated based on an image style that matches an age of a user, so that the image displayed in the display area in the cockpit better conforms to an age feature of the user, and use experience of the user can be improved.

Alternatively, when it is detected that a tone of a speech signal is happy or sad, a final image may be generated based on an image style that matches a mood of a user, so that the image displayed in the display area in the cockpit better conforms to the current mood of the user, and driving experience of the user can be improved.

In some possible implementations, controlling, based on the feature information of the first speech signal, the first display area to display the second image includes: generating the second image based on the feature information of the first speech signal; and controlling the first display area to display the second image.

With reference to the first aspect, in some implementations of the first aspect, the sensor data includes the first image, and the method further includes: performing style transfer on the first image, to obtain the second image.

Based on the foregoing technical solution, the second image may be obtained by performing style transfer on the image acquired by the camera, so that visual perception of the user can be improved, visual fatigue caused to the user by displaying a single and homogeneous wallpaper in a vehicle-mounted display can be avoided, and driving experience of the user can be improved.

In addition, when the camera is an in-cockpit camera, a problem that a selfie or a group photo effect is poor due to a single camera arrangement position in the cockpit or a single landscape background in the cockpit can be resolved, so that a shooting effect in the cockpit and shooting fun of the user can be improved.

With reference to the first aspect, in some implementations of the first aspect, the sensor data includes the first image, and the method further includes: determining text description content based on the first image, where the text description content includes at least one of a scene, an object, a person, or an environment corresponding to the first image; and determining the second image based on the text description content.

Based on the foregoing technical solution, the text description content corresponding to the first image may be first determined based on the first image, and then the second image is generated based on the text description content. In this way, the image acquired by the camera is re-created, so that visual fatigue caused to the user by displaying a single and homogeneous image in the display area can be avoided, visual perception of the user and a degree of personalization of content displayed in the cockpit can be improved, and driving experience of the user can be improved.

In some possible implementations, determining the text description content based on the first image includes: inputting the first image into an image-to-text (image-to-text) model, to obtain the text description content.

In some possible implementations, determining the second image based on the text description content includes: inputting the text description content into a text-to-image (text-to-image) model, to obtain the second image.

In some possible implementations, when the input from the first user in the cockpit for indicating to generate the image is detected, the transportation means may periodically obtain an image acquired by a camera outside the cockpit.

For example, in a first period, the first image acquired by the camera outside the cockpit is obtained, and the first text description content corresponding to the first image is obtained based on the first image. In this way, the first display area is controlled, based on the first text description content, to display the second image.

For another example, in a second period, a fifth image acquired by the camera outside the cockpit is obtained, and second text description content corresponding to the fifth image is obtained based on the fifth image. In this way, the first display area is controlled, based on the second text description content, to display a sixth image. The first text description content is different from the second text description content.

In this way, after the camera outside the cockpit acquires images of different text description content, the image displayed in the first display area can be updated in time, so that visual experience of the user can be further improved, and visual fatigue caused to the user by displaying a single and homogeneous wallpaper in the display area of the transportation means can be avoided. In addition, content displayed in the first display area always matches a scenery outside the cockpit, to help improve driving experience of the user.

With reference to the first aspect, in some implementations of the first aspect, the sensor data includes the first image, and the method further includes: inputting the first image into an image-to-image (image-to-image) model, to obtain the second image.

Based on the foregoing technical solution, the second image may be obtained by inputting the image acquired by the camera into the image-to-image model, to re-create the image acquired by the camera. In this way, visual fatigue caused to the user by displaying a single and homogeneous image in the display area can be avoided, visual perception of the user and a degree of personalization of content displayed in the cockpit can be improved, and driving experience of the user can be improved.

With reference to the first aspect, in some implementations of the first aspect, the cockpit further includes a second display area, and the method further includes: when a second speech signal from a second user in the cockpit is detected, controlling, based on the second speech signal and the second image, the second display area to display a third image, where the second display area is associated with an area in which the second user is located.

Based on the foregoing technical solution, when it is detected that the second user in the cockpit gives the second speech signal, the third image may be generated based on the second image and the second speech signal. In addition, the transportation means may switch from displaying the second image in the first display area to displaying the third image in the second display area, so that the second user can view an updated image in the display area in the area in which the second user is located, and use experience of the user can be improved.

For example, the transportation means is a vehicle. If the second user is located in a front passenger area, the second display area may be a display area on a front passenger entertainment screen, or the second display area may be a display area that is on the central display and that is close to the front passenger area.

In some possible implementations, that the second speech signal from the second user in the cockpit is detected includes that the second speech signal from the second user in the cockpit is detected after the first display area is controlled to display the second image.

In some possible implementations, the second speech signal is used to modify the second image, or re-create the second image.

With reference to the first aspect, in some implementations of the first aspect, before obtaining the sensor data, the method further includes: controlling the first display area to display a fourth image; and controlling, based on the sensor data, the first display area to display the second image includes: controlling, based on the fourth image and the sensor data, the first display area to switch from displaying the fourth image to displaying the second image.

Based on the foregoing technical solution, the second image may be first generated based on the sensor data and an original image displayed in the display area. In addition, the transportation means (for example, the vehicle) may switch from displaying the fourth image in the first display area to displaying the second image, so that the wallpaper displayed in the first display area is automatically updated. In this way, visual fatigue caused to the user by displaying a single and homogeneous image in the display area can be avoided, visual perception of the user and a degree of personalization of content displayed in the cockpit can be improved, and driving experience of the user can be improved.

With reference to the first aspect, in some implementations of the first aspect, the method further includes: establishing a connection to a terminal device; and sending the second image to the terminal device.

Based on the foregoing technical solution, after the connection is established between the transportation means and the terminal device, the transportation means may further send the generated second image to the terminal device, so that the user can view, on the terminal device, the image generated by the transportation means, the user can store the image locally on the terminal device in time, share the image with another user through the terminal device, or continue to create the image based on local map repair software on the terminal device, and use experience of the user can be improved.

In some possible implementations, sending the second image to the terminal device includes: sending the second image to the terminal device by using a short-range communication technology; or sending the second image to the terminal device through a server.

In some possible implementations, before sending the second image to the terminal device, the method further includes: determining that an account logged in to the transportation means is associated with an account logged in to the terminal device.

For example, that the account logged in to the transportation means is associated with the account logged in to the terminal device includes: The account logged in to the transportation means is the same as the account logged in to the terminal device, or the account logged in to the transportation means and the account logged in to the terminal device are in a same family group, or the account logged in to the terminal device is an account authorized by the transportation means.

With reference to the first aspect, in some implementations of the first aspect, the method further includes: sending the second image to a cloud server.

For example, the cloud server may be a server corresponding to a wallpaper application.

Based on the foregoing technical solution, the transportation means sends information about the second image to the cloud server, so that another user can download the second image through the wallpaper application.

According to a second aspect, this application provides a control apparatus, where the apparatus includes a detection unit, an obtaining unit, and a control unit. The obtaining unit is configured to obtain sensor data when the detection unit detects an input from a first user in a cockpit of a transportation means for indicating to generate an image, where the sensor data includes a first image acquired by a camera of the transportation means or a first speech signal acquired by a microphone of the transportation means; and the control unit is configured to control, based on the sensor data, a first display area to display a second image, where the cockpit includes the first display area.

With reference to the second aspect, in some implementations of the second aspect, the sensor data includes the first speech signal, and the control unit is configured to control, based on feature information of the first speech signal, the first display area to display the second image, where the feature information of the first speech signal includes at least one of a pitch, a timbre, and a tone of the first speech signal.

With reference to the second aspect, in some implementations of the second aspect, the sensor data includes the first image, and the apparatus further includes: a style transfer unit, configured to perform style transfer on the first image, to obtain the second image.

With reference to the second aspect, in some implementations of the second aspect, the sensor data includes the first image, and the apparatus further includes: a determining unit, configured to: determine text description content based on the first image, where the text description content includes at least one of a scene, an object, a person, or an environment corresponding to the first image; and determine the second image based on the text description content.

With reference to the second aspect, in some implementations of the second aspect, the sensor data includes the first image, and the apparatus further includes: an image generation unit, configured to input the first image into an image-to-image model, to obtain the second image.

With reference to the second aspect, in some implementations of the second aspect, the cockpit further includes a second display area, and the control unit is further configured to: when the detection unit detects a second speech signal from a second user in the cockpit, control, based on the second speech signal and the second image, the second display area to display a third image, where the second display area is associated with an area in which the second user is located.

With reference to the second aspect, in some implementations of the second aspect, the control unit is configured to: before the obtaining unit obtains the sensor data, control the first display area to display a fourth image; and control, based on the fourth image and the sensor data, the first display area to switch from displaying the fourth image to displaying the second image.

With reference to the second aspect, in some implementations of the second aspect, the apparatus further includes: a connection establishment unit, configured to establish a connection to a terminal device; and a first sending unit, configured to send the second image to the terminal device.

With reference to the second aspect, in some implementations of the second aspect, the apparatus further includes: a second sending unit, configured to send the second image to a cloud server.

According to a third aspect, this application provides a control apparatus. The control apparatus includes a processing unit and a storage unit, where the storage unit is configured to store instructions, and the processing unit executes the instructions stored in the storage unit, so that the control apparatus performs the method according to any one of the possible implementations of the first aspect.

According to a fourth aspect, this application provides a control system, where the system includes a display apparatus and a computing platform, and the computing platform includes the apparatus according to any one of the possible implementations of the second aspect or the third aspect.

In some possible implementations, the control system further includes a sensor, and the sensor includes a camera and/or a microphone.

According to a fifth aspect, this application provides a transportation means, where the transportation means includes the apparatus according to any one of the possible implementations of the second aspect, or includes the apparatus in the third aspect, or includes the system in the fourth aspect.

In some possible implementations, the transportation means is a vehicle.

According to a sixth aspect, this application provides a computer program product. The computer program product includes computer program code. When the computer program code is run on a computer, the computer is enabled to perform the method according to any one of the possible implementations of the first aspect.

It should be noted that all or some of the computer program code may be stored in a first storage medium. The first storage medium may be packaged together with a processor, or may be packaged separately from a processor. This is not specifically limited in this application.

According to a seventh aspect, this application provides a computer-readable medium. The computer-readable medium stores program code. When the computer program code is run on a computer, the computer is enabled to perform the method according to any one of the possible implementations of the first aspect.

According to an eighth aspect, this application provides a chip system. The chip system includes a processor, configured to invoke a computer program or computer instructions stored in a memory, to enable the processor to perform the method according to any one of the possible implementations of the first aspect.

With reference to the eighth aspect, in a possible implementation, the processor is coupled to the memory through an interface.

With reference to the eighth aspect, in a possible implementation, the chip system further includes the memory. The memory stores the computer program or computer instructions.

### BRIEF DESCRIPTION OF DRAWINGS

FIG. 1 is a block diagram of a vehicle according to an embodiment of this application;
FIG. 2 is a diagram of display distribution in a vehicle cockpit according to an embodiment of this application;
FIG. 3(a) to FIG. 3(d) show a group of graphical user interfaces GUIs according to an embodiment of this application;
FIG. 4(a) to FIG. 4(c) show another group of GUIs according to an embodiment of this application;
FIG. 5(a) and FIG. 5(b) show another group of GUIs according to an embodiment of this application;
FIG. 6(a) to FIG. 6(c) show another group of GUIs according to an embodiment of this application;
FIG. 7(a) to FIG. 7(c) show another group of GUIs according to an embodiment of this application;
FIG. 8(a)-1 to FIG. 8(c)-2 show another group of GUIs according to an embodiment of this application;
FIG. 9A and FIG. 9B show another GUI according to an embodiment of this application;
FIG. 10 is a schematic flowchart of a control method according to an embodiment of this application;
FIG. 11 is a block diagram of a control system according to an embodiment of this application; and
FIG. 12 is a block diagram of a control apparatus according to an embodiment of this application.

### DESCRIPTION OF EMBODIMENTS

The following describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and represents that three relationships may exist. For example, at least one of A and B may represent the following three cases: Only A exists, both A and B exist, and only B exists.

The prefix words "first", "second", and the like in embodiments of this application are merely intended to distinguish between different objects, and impose no limitation on locations, sequences, priorities, quantities, content, or the like of the described objects. Use of a prefix word, such as an ordinal number, used to distinguish described objects in embodiments of this application does not constitute a limitation on the described objects. For a description of a described refer to a description in context of the claims or the embodiments, and the use of the prefix word should not constitute a redundant limitation. In addition, in the descriptions of embodiments, unless otherwise specified, "a plurality of" means two or more.

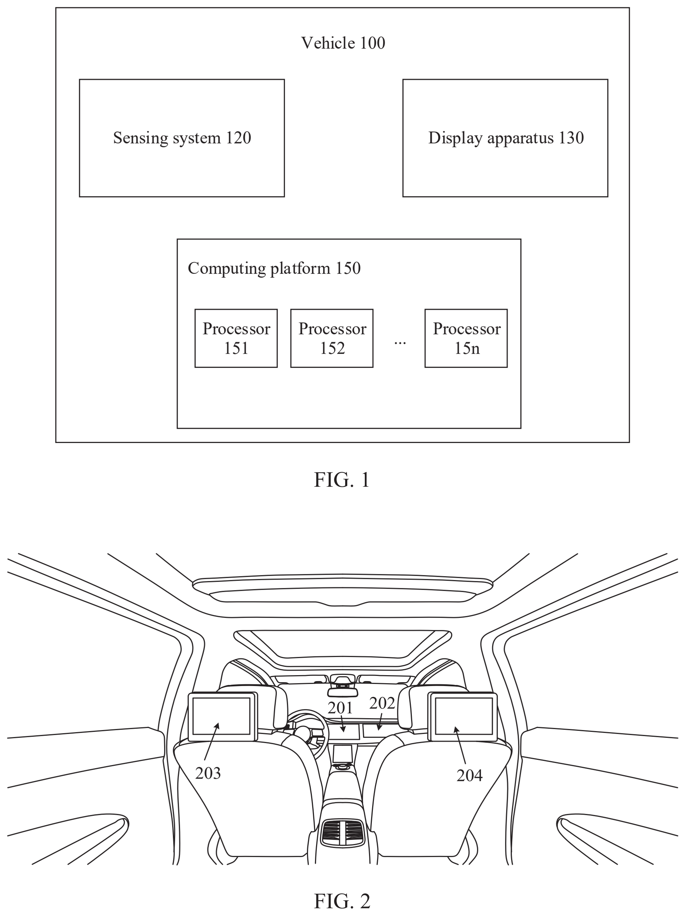

FIG. 1 is a block diagram of a vehicle 100 according to an embodiment of this application. The vehicle 100 may include a sensing system 120, a display apparatus 130, and a computing platform 150. The sensing system 120 may include one or more sensors that sense information about an ambient environment of the vehicle 100. For example, the sensing system 120 may include a positioning system. The positioning system may be a global positioning system (global positioning system, GPS), a BeiDou system, or another positioning system. The sensing system 120 may further include one or more of an inertial measurement unit (inertial measurement unit, IMU), a lidar, a millimeter-wave radar, an ultrasonic radar, and a camera apparatus.

Some or all of functions of the vehicle 100 may be controlled by the computing platform 150. The computing platform 150 may include one or more processors, such as processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all processors in the processor 151 to the processor 15n may invoke the instructions in the memory and execute the instructions to implement a corresponding function.

The display apparatus 130 in a cockpit is mainly classified into two types: a first type is a vehicle-mounted display, and a second type is a projection display, for example, a head-up display (head-up display, HUD) apparatus. The vehicle-mounted display is a physical display and is an important part of a vehicle-mounted infotainment system. A plurality of displays can be disposed in the cockpit, such as a digital instrument display, a central display, a display in front of a passenger (also referred to as a front passenger) in a front passenger seat, a display in front of a left rear passenger, and a display in front of a right rear passenger. Even a window can be used as a display for display. The head-up display is also referred to as a head-up display system. The head-up display is mainly configured to display driving information such as a speed and navigation on a display device (for example, a windshield) in front of a driver, to reduce line-of-sight transfer time of the driver, avoid a pupil change caused by a line-of-sight transfer of the driver, and improve driving safety and comfort. For example, the HUD includes a combiner-HUD (combiner-HUD, C-HUD) system, a windshield-HUD (windshield-HUD, W-HUD) system, and an augmented reality-HUD (augmented reality-HUD, AR-HUD) system. It should be understood that the HUD may also have another type of system with technology evolution. This is not limited in this application.

FIG. 2 is a diagram of an example of display distribution in a vehicle cockpit according to an embodiment of this application. As shown in FIG. 2, a cockpit of a vehicle may include a display 201 (or may be referred to as a central display), a display 202 (or may be referred to as a front passenger entertainment screen), a display 203 (or may be referred to as an entertainment screen in a left area of a second row), a display 204 (or may be referred to as an entertainment screen in a right area of a second row), and an instrument panel.

It should be understood that a graphical user interface (graphical user interface, GUI) in the following embodiments is described by using a five-seat vehicle shown in FIG. 2 as an example. Embodiments of this application are not limited thereto. For example, a cockpit of a seven-seat sport utility vehicle (sport utility vehicle, SUV) may include a central display, a front passenger entertainment screen, an entertainment screen in a left area of a second row, an entertainment screen in a right area of a second row, an entertainment screen in a left area of a third row, and an entertainment screen in a right area of a third row. For another example, a cockpit of a bus may include a front-row entertainment screen and a rear-row entertainment screen; or may include a display in a driving area and an entertainment screen in a passenger area. In an implementation, the entertainment screen in the passenger area may alternatively be disposed on a top of the cockpit.

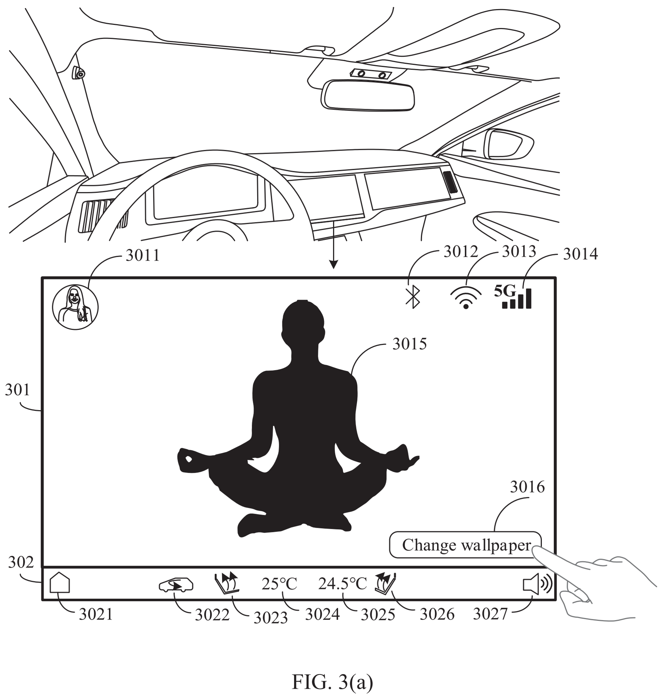

FIG. 3(a) to FIG. 3(d) show a group of GUIs according to an embodiment of this application.

As shown in FIG. 3(a), a vehicle display 201 includes a content display area 301 and a function bar 302. In the current content display area 301, profile picture information 3011 of a logged-in user account on a vehicle, a Bluetooth function icon 3012, a Wi-Fi function icon 3013, a cellular network signal icon 3014, a wallpaper 3015, and a wallpaper changing control 3016 are displayed. The function bar 302 includes an icon 3021 for switching to display a desktop, a vehicle internal circulation icon 3022, a driver seat heating function icon 3023, a driver area air conditioner temperature display icon 3024, a front passenger area air conditioner temperature display icon 3025, a front passenger seat heating function icon 3026, and a volume setting icon 3027.

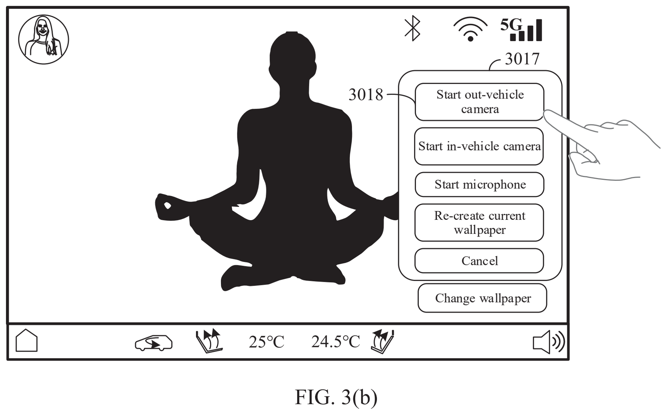

As shown in FIG. 3(b), when an operation of tapping the control 3016 by a user is detected, a prompt box 3017 may be displayed in the content display area 301. The prompt box 3017 includes an out-vehicle camera start control 3018, an in-vehicle camera start control, a microphone start control, a current wallpaper re-creation control, and a cancel control.

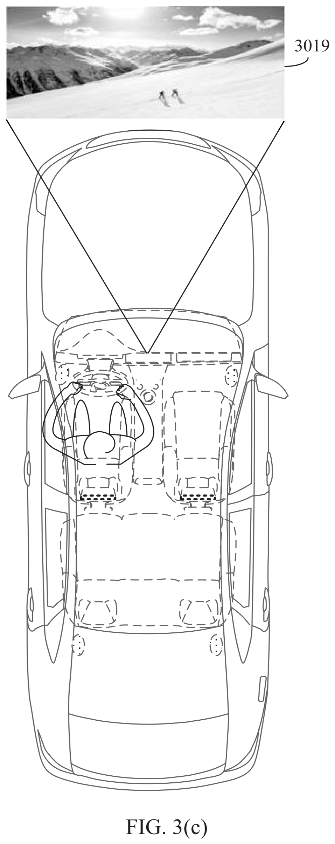

As shown in FIG. 3(c), when an operation of tapping the control 3018 by the user is detected, the vehicle may start a camera outside the cockpit and obtain an image 3019 acquired by the camera outside the cockpit.

In an embodiment, obtaining the image 3019 acquired by the camera outside the cockpit includes: obtaining one frame of image or a plurality of frames of images acquired by the camera outside the cockpit.

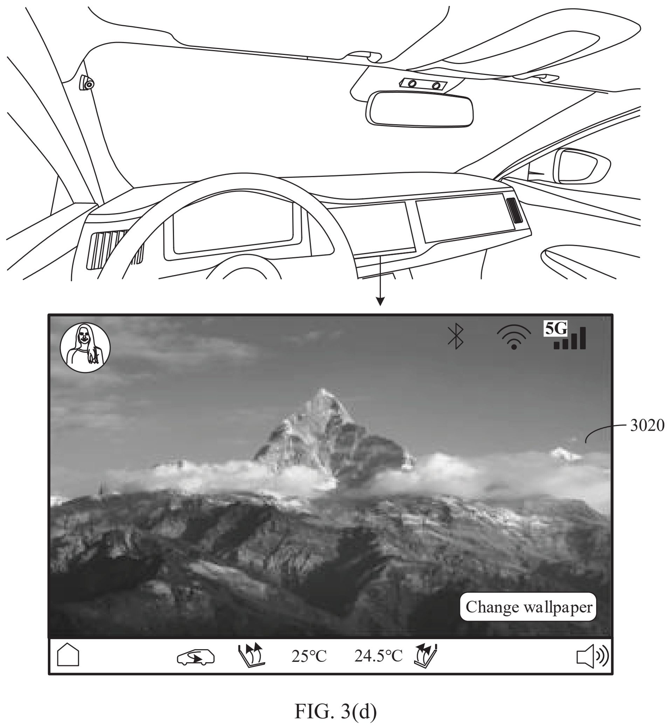

As shown in FIG. 3(d), after obtaining the image 3019 acquired by the camera outside the cockpit, the vehicle may generate an image 3020 based on the image 3019, and display the image 3020 in the content display area 301.

For example, that the vehicle may generate the image 3020 based on the image 3019 includes: The vehicle may input the image 3019 into an image-to-image model, to obtain the image 3020.

For example, that the vehicle may generate the image 3020 based on the image 3019 includes: inputting the image 3019 into an image-to-text model, to obtain text description content corresponding to the image 3019. For example, the text description content includes at least one of a scenario (for example, winter, outdoor, or mountain climbing), an object (for example, white clouds or a snow mountain), a person (for example, two mountain climbers), or an environment (for example, severe cold, sunny, or blue sky and white clouds). The text description content corresponding to the image 3019 is input into a text-to-image model, to obtain the image 3020.

In an embodiment, the image 3020 may be a photo, an animation, a video, or the like.

The foregoing embodiment is described by using an example in which it is detected that the user taps the control 3016 and selects the control 3018 in the prompt box 3017, to obtain the image 3019 acquired by the camera outside the cockpit, and determine the image 3020 based on the image 3019. Embodiments of this application are not limited thereto.

For example, the camera outside the cockpit may be further controlled, in a manner of triggering by using a speech instruction, to acquire an image and an image finally displayed on the vehicle-mounted display is determined based on the image. For example, when it is detected that the user gives a speech instruction "Xiao A, Xiao A, create a wallpaper based on a scene outside a vehicle", an image acquired by the camera outside the cockpit may be obtained, and a new wallpaper is generated based on the image.

For another example, the content display area may not include the control 3016. In a traveling process, the vehicle may periodically obtain an image acquired by the camera outside the cockpit. For example, in a first period, an image 1 acquired by the camera outside the cockpit is input into the image-to-text model, to obtain text description content 1; and the text description content 1 is input into the text-to-image model, to obtain an image 2, and the content display area 301 is controlled to display the image 2. In a second period, an image 3 acquired by the camera outside the cockpit is input into the image-to-text model, to obtain text description content 2; and when the text description content 2 is different from the text description content 1, the text description content 2 may be input into the text-to-image model, to obtain an image 4, and the content display area 301 is controlled to switch from displaying the image 2 to displaying the image 4.

In this embodiment of this application, the image acquired by the camera outside the cockpit may be re-created, to obtain another image. In this way, the user may view, on the vehicle-mounted display, the image created based on locally obtained content, so that visual experience of the user can be improved, visual fatigue caused to the user by displaying a single and homogeneous wallpaper in the vehicle-mounted display can be avoided, and driving experience of the user can be improved.

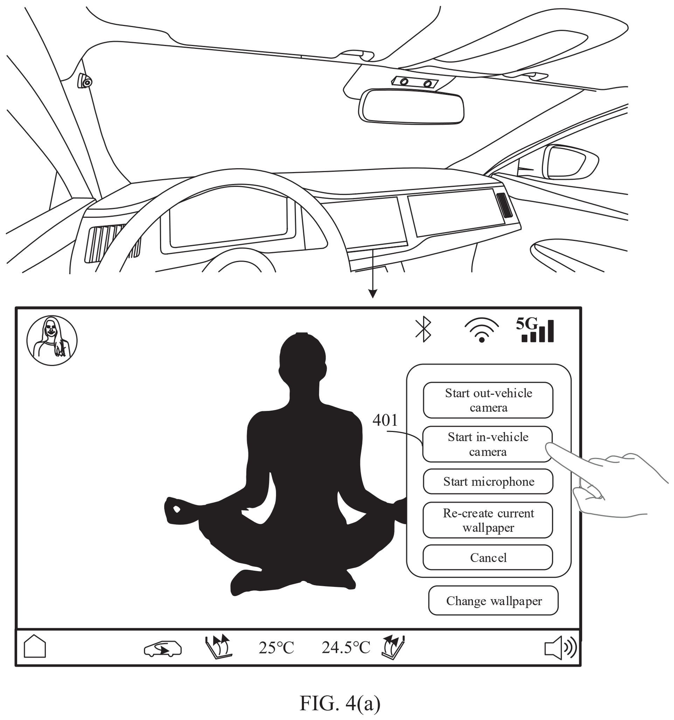

FIG. 4(a) to FIG. 4(c) show another group of GUIs according to an embodiment of this application.

As shown in FIG. 4(a), the prompt box 3017 further includes an in-vehicle camera start control 401. When an operation of tapping the control 401 by a user is detected, the camera in the cockpit may be started and an image acquired by the camera in the cockpit may be obtained.

For example, the camera in the cockpit may include a camera of a driver monitor system (driver monitor system, DMS) or a camera of a cockpit monitor system (cockpit monitor system, CMS).

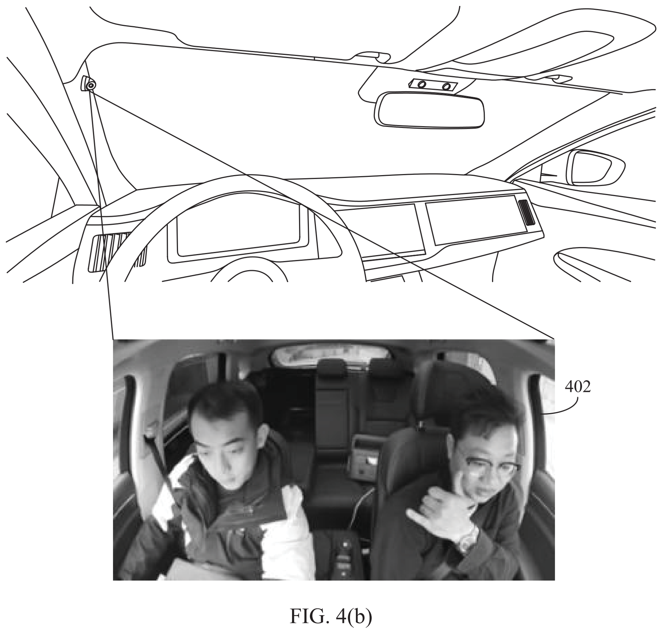

As shown in FIG. 4(b), the vehicle may obtain an image 402 acquired by the camera in the cockpit.

In an embodiment, the image 402 may include one or more frames of images.

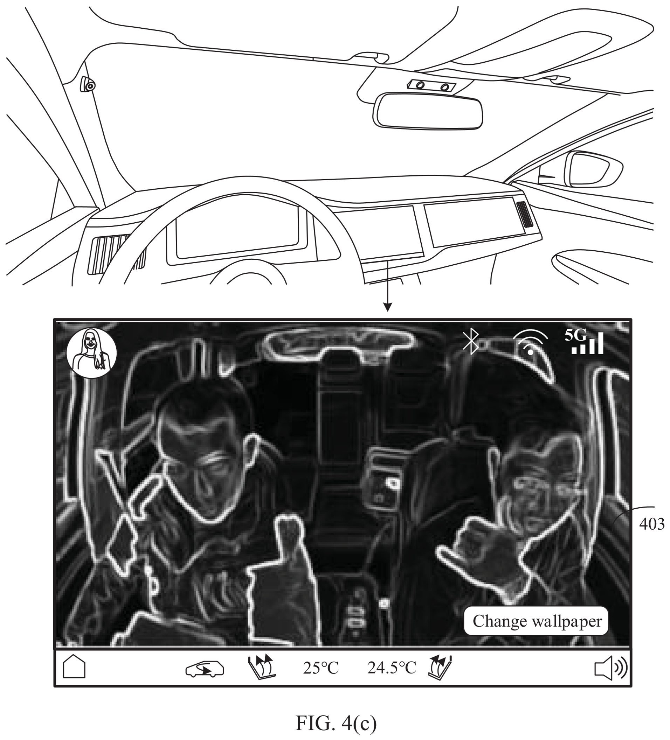

As shown in FIG. 4(c), after obtaining the image 402 acquired by the camera in the cockpit, the vehicle may generate an image 403 based on the image 402, and display the image 403 in the content display area 301.

For example, that the vehicle may generate the image 403 based on the image 402 includes: The vehicle may perform style transfer on the image 402 to obtain the image 403 of another style. For example, the another style includes Chinese painting, cartoon, thick line, watercolor, or oil painting. The style of the image 403 may be a thick line style.

In this embodiment of this application, the image acquired by the camera in the cockpit may be re-created, to obtain another image. In this way, the user may view, on the vehicle-mounted display, the image created based on locally obtained content, so that visual experience of the user can be improved, visual fatigue caused to the user by displaying a single and homogeneous wallpaper in the vehicle-mounted display can be avoided, and driving experience of the user can be improved. In addition, a problem that a selfie or a group photo effect is poor due to a single camera arrangement position in the cockpit or a single landscape background in the cockpit can be resolved, so that a shooting effect in the cockpit and shooting fun of the user can be improved.

With reference to the GUIs shown in FIG. 4(a) to FIG. 4(c), the foregoing describes a process of automatically obtaining a new image after style transfer is performed on the image acquired in the cockpit. In this embodiment of this application, after the image acquired in the cockpit is obtained, the user may be further prompted to select a preferred style, so that the user can also participate in a process of creating a new wallpaper.

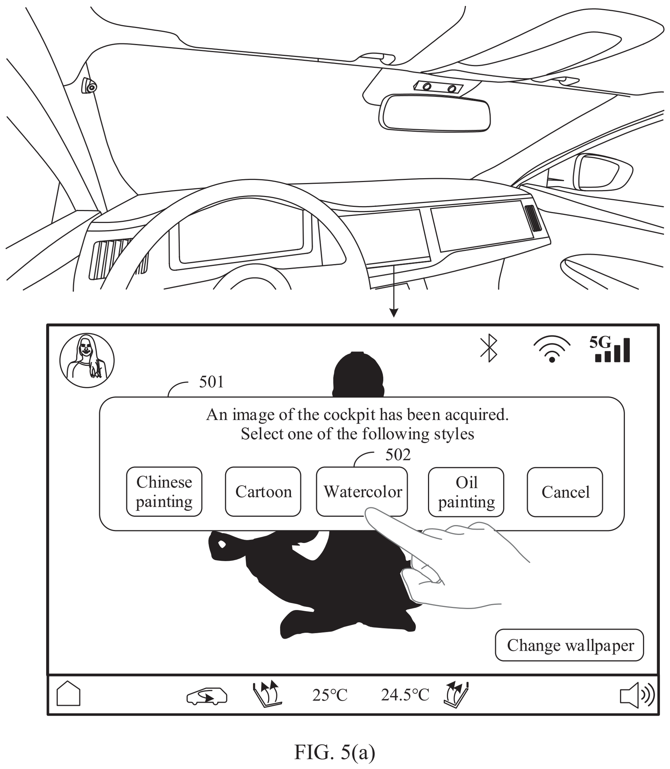

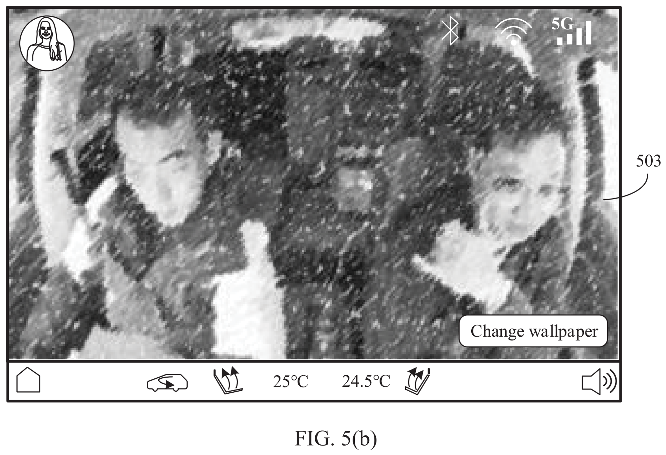

FIG. 5(a) and FIG. 5(b) show another group of GUIs according to an embodiment of this application.

As shown in FIG. 5(a), after obtaining the image 402 acquired by the camera in the cockpit, the vehicle may display a prompt box 501 in the content display area. The prompt box includes prompt information "An image of the cockpit has been acquired. Select one of the following styles", a control corresponding to a Chinese painting style, a control corresponding to a cartoon style, a control 502 corresponding to a watercolor style, a control corresponding to an oil painting style, and a cancel control.

The foregoing is merely described by using the Chinese painting style, the cartoon style, the watercolor style, and the oil painting style as an example. This embodiment of this application is not limited thereto. For example, the prompt box 501 may further include more or fewer styles.

As shown in FIG. 5(b), when an operation of tapping the control 502 by a user is detected, the vehicle may transfer a style of the image 402 acquired by the camera in the cockpit to a watercolor style, to generate an image 503 and display the image 503 in the content display area 301.

In this embodiment of this application, after the image acquired by the camera is obtained, the user may be further prompted to select a preferred style. After it is detected that the user selects a style, style transfer may be performed on the image acquired by the camera, to obtain a new image. In this way, the user participates in a process of generating a new image, so that the new image finally displayed on the display can better meet an expectation of the user, and visual experience and driving experience of the user can be improved.

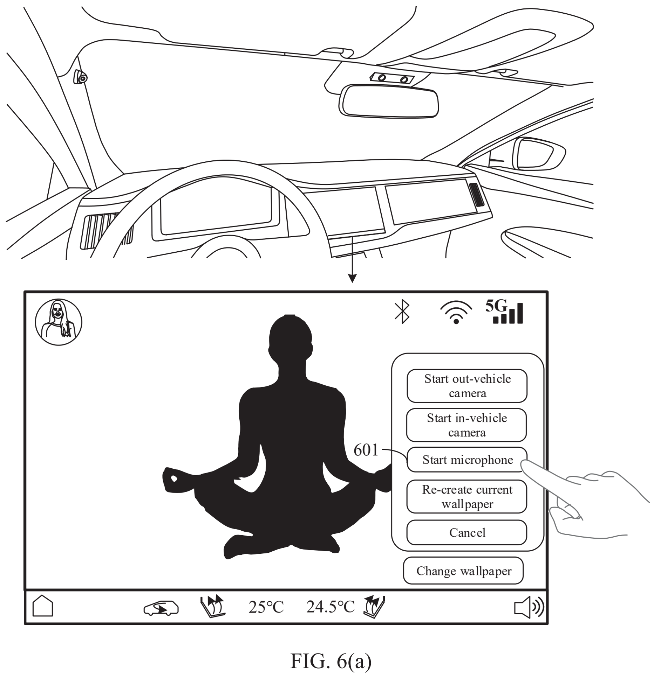

FIG. 6(a) to FIG. 6(c) show another group of GUIs according to an embodiment of this application.

As shown in FIG. 6(a), the prompt box 3017 further includes an in-vehicle camera start control 601. When an operation of tapping the control 601 by the user is detected, a microphone in the cockpit may be controlled to acquire a speech instruction (or a speech signal) given by a user.

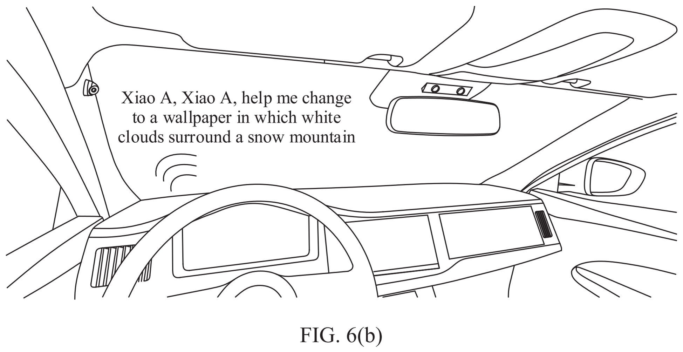

As shown in FIG. 6(b), the vehicle obtains a speech instruction "Xiao A, Xiao A, help me change to a wallpaper in which white clouds surround a snow mountain" through the microphone.

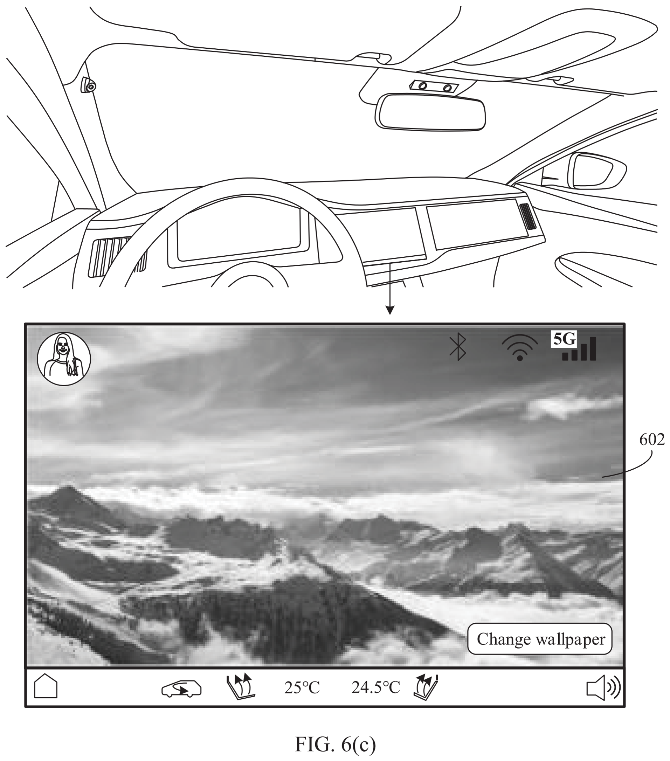

As shown in FIG. 6(c), in response to the obtained speech instruction, the vehicle may generate an image 602 based on the speech instruction, and display the image 602 in the content display area 301.

For example, that the vehicle may generate the image 602 based on the speech instruction includes: The vehicle may generate the image 602 based on the speech instruction by using the text-to-image model.

In this embodiment of this application, after the speech instruction acquired by the microphone is obtained, a new image may be obtained based on the speech instruction. In this way, the user may view, on the vehicle-mounted display, the image created based on the speech instruction sent by the user, so that visual experience of the user can be improved, visual fatigue caused to the user by displaying a single and homogeneous wallpaper in the vehicle-mounted display can be avoided, and driving experience of the user can be improved.

In an embodiment, the display in the cockpit may be controlled to display the image 602 based on an area in which the user who gives the speech instruction is located.

For example, the vehicle may determine, based on the speech instruction acquired by a microphone array in the cockpit, the area in which the user who gives the speech instruction is located. For example, if the area in which the user who gives the speech instruction is located is a front passenger area, the image 602 may be displayed on the display 202.

In an embodiment, that the vehicle may generate the image 602 based on the speech instruction includes: generating the image 602 based on feature information of the speech instruction, where the feature information includes at least one of a pitch, a timbre, and a tone.

For example, the pitch may indicate that the speech instruction is a rising pitch or a falling pitch. Table 1 shows a correspondence between a pitch and an image style.

**Table 1**

| Pitch | Image style |
|---|---|
| Rising pitch | Black and white |
| Falling pitch | Fashion |
| ... | ... |

For example, when it is detected that the pitch of the speech instruction is a rising pitch, an image of a fashion style may be generated based on the speech instruction.

For another example, when it is detected that the pitch of the speech instruction is a falling pitch, an image of a black-and-white style may be generated based on the speech instruction.

For example, the timbre may indicate that the speech instruction is a male voice or a female voice. Table 2 shows a correspondence between a timbre and an image style.

**Table 2**

| Timbre | Image style |
|---|---|
| Male voice | Chinese painting |
| Female voice | Watercolor |
| ... | ... |

For example, when it is detected that the timbre of the speech instruction is a male voice, an image of a Chinese painting style may be generated based on the speech instruction.

For another example, when it is detected that the timbre of the speech instruction is a female voice, an image of a watercolor style may be generated based on the speech instruction.

In this embodiment of this application, when it is detected that the timbre of the speech instruction is a male voice or a female voice, a final image may be generated based on an image style that matches a gender of the user, so that the image displayed on the vehicle-mounted display better conforms to a gender feature of the user, and driving experience of the user can be improved.

For example, the timbre may alternatively indicate that the speech instruction is a voice of an elderly person or a voice of a child. Table 3 shows another correspondence between a timbre and an image style.

**Table 3**

| Timbre | Image style |
|---|---|
| Voice of elderly person | Oil painting |
| Voice of child | Cartoon |
| ... | ... |

For example, when it is detected that the timbre of the speech instruction is a voice of an elderly person, an image of an oil painting style may be generated based on the speech instruction.

For another example, when it is detected that the timbre of the speech instruction is a voice of a child, an image of a cartoon style may be generated based on the speech instruction.

In this embodiment of this application, when it is detected that the timbre of the speech instruction is a voice of an elderly person or a voice of a child, a final image may be generated based on an image style that matches an age of the user, so that an image displayed on the vehicle-mounted display better conforms to an age feature of the user, and driving experience of the user can be improved.

For example, the tone may reflect a mood (for example, happy or sad) of the user when the user gives the speech instruction. Table 4 shows another correspondence between a tone and an image style.

**Table 4**

| Tone | Image style |
|---|---|
| Happy | Fresh |
| Sad | Black and white |
| ... | ... |

For example, when it is detected that the tone of the speech instruction is a happy tone, an image of a fresh style may be generated based on the speech instruction.

For another example, when it is detected that the tone of the speech instruction is a sad tone, an image of a black-and-white style may be generated based on the speech instruction.

In this embodiment of this application, the tone of the speech instruction of the user may reflect a mood of the user. When it is detected that the tone of the speech instruction is happy or sad, a final image may be generated based on an image style that matches the mood of the user, so that the image displayed on the vehicle-mounted display better conforms to the current mood of the user, and driving experience of the user can be improved.

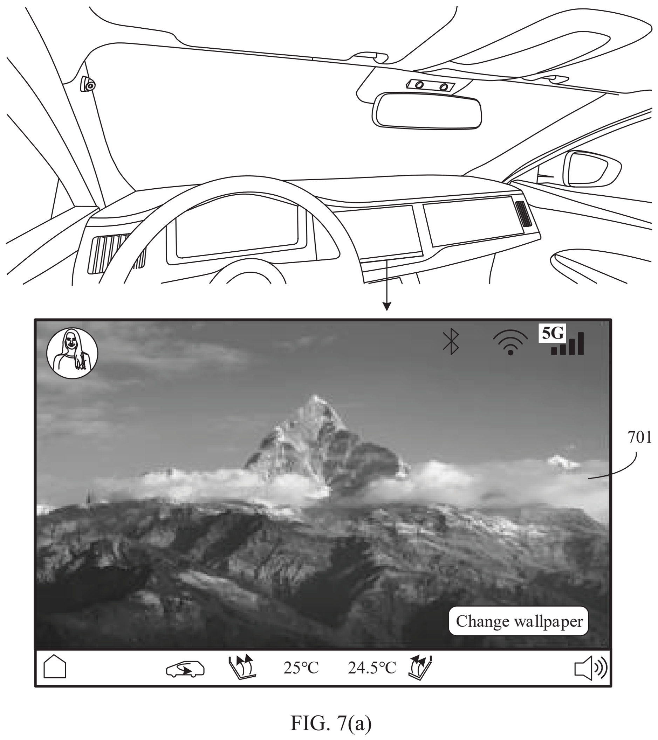

FIG. 7(a) to FIG. 7(c) show another group of GUIs according to an embodiment of this application.

As shown in FIG. 7(a), the vehicle may display an image 701 in the content display area 301.

The image 701 may be an image generated based on the image acquired by the camera outside the cockpit, the image acquired by the camera in the cockpit, or the speech instruction acquired by the microphone, or the image 701 may be an image locally stored in the vehicle (for example, a wallpaper downloaded by the user through the wallpaper application).

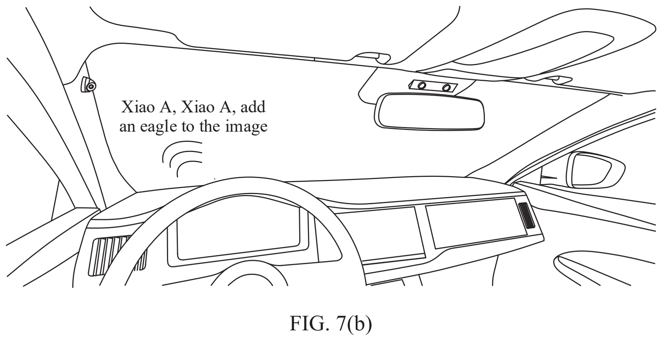

As shown in FIG. 7(b), the vehicle obtains a speech instruction "Xiao A, Xiao A, add an eagle to the image" through the microphone.

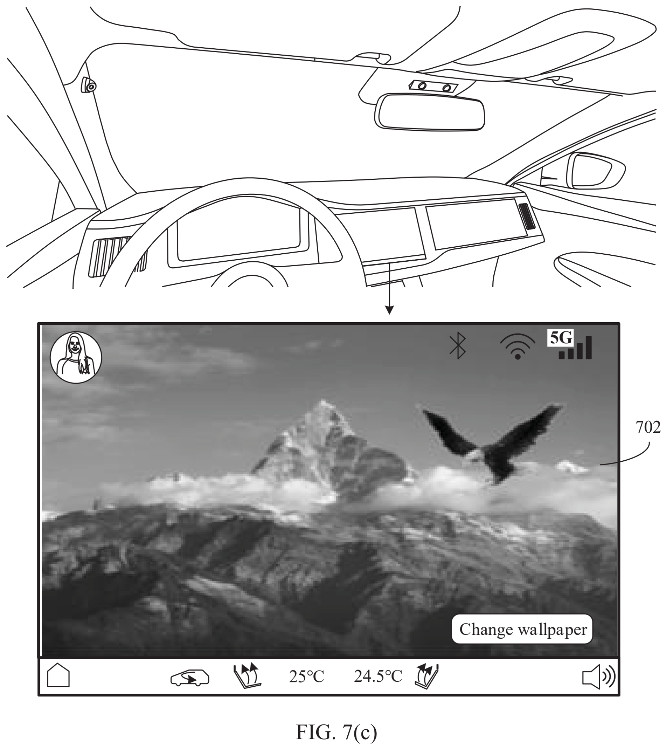

As shown in FIG. 7(c), in response to the obtained speech instruction, the vehicle may generate an image 702 based on the image 701 and the speech instruction, and display the image 702 in the content display area 301.

In an embodiment, the image 702 may be generated based on an area in which a user who gives the speech instruction is located. For example, if the area in which the user who gives the speech instruction is located is the front passenger area, the eagle may be added to a right area of the image 701. For example, if the area in which the user who gives the speech instruction is located is the driver area, the eagle may be added to a left area of the image 701.

In this embodiment of this application, the user may edit or re-create, based on the speech instruction, the image locally stored in the vehicle or the image determined based on data acquired by the camera or the microphone. In this way, the user may create an image based on the speech instruction, so that all users in the cockpit become image editing artists, an image finally presented to the user better meets an expectation of the user, and driving experience of the user can be improved.

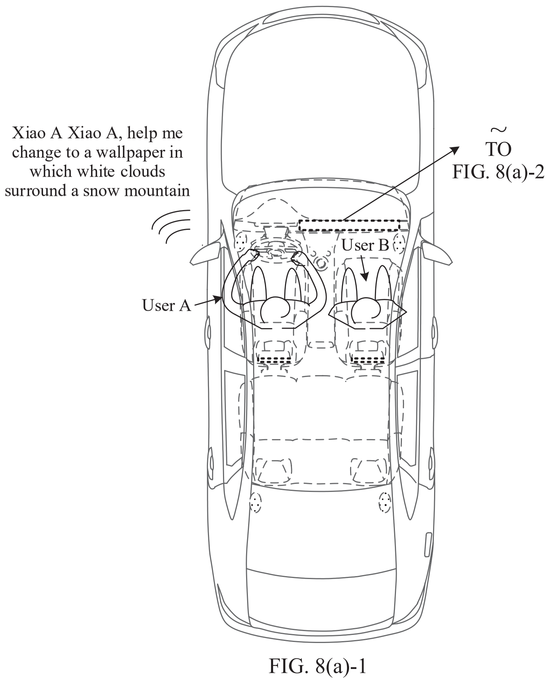

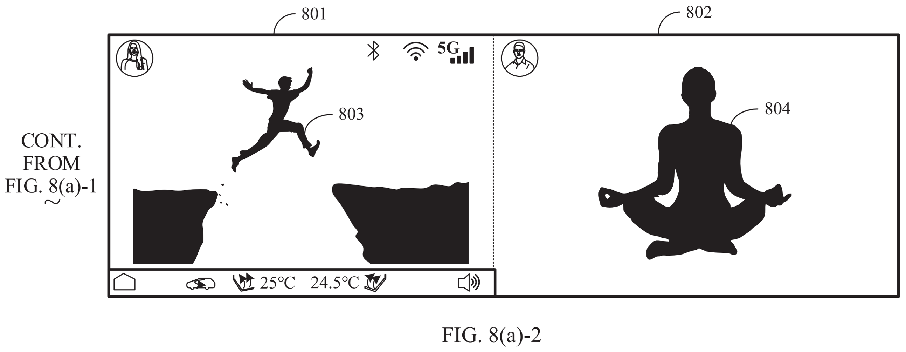

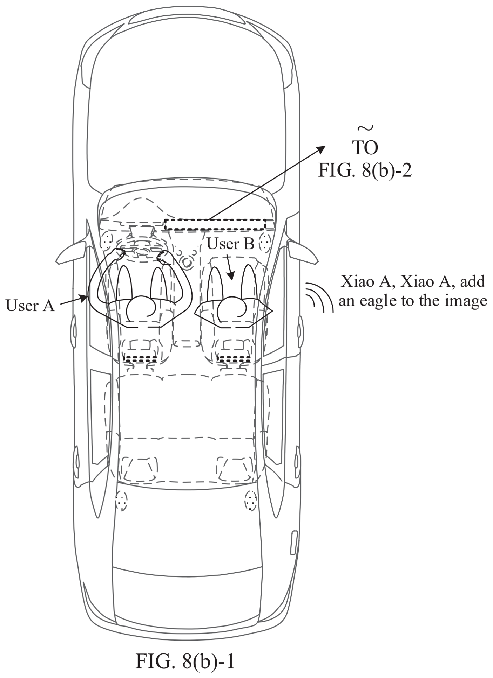

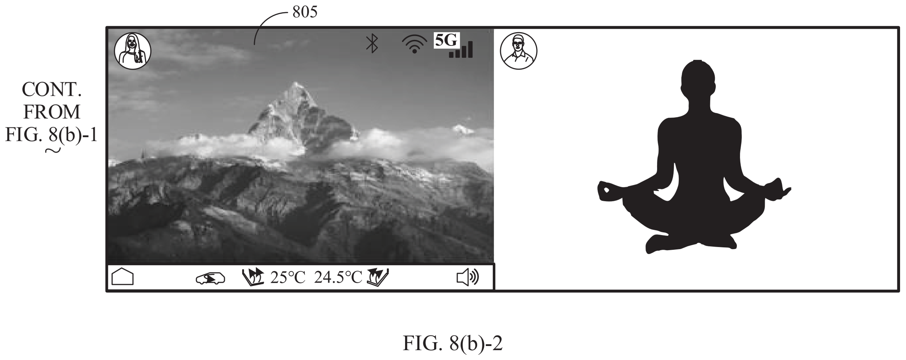

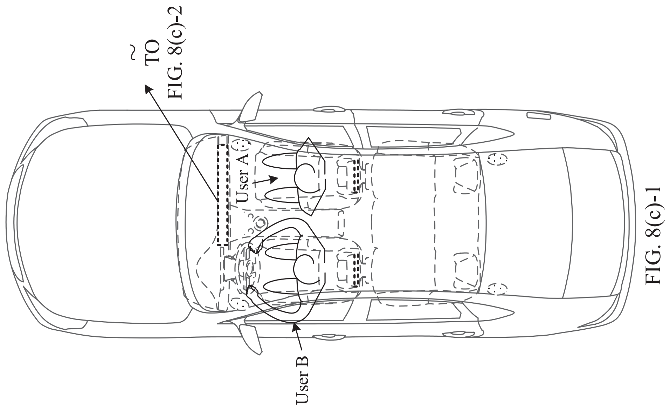

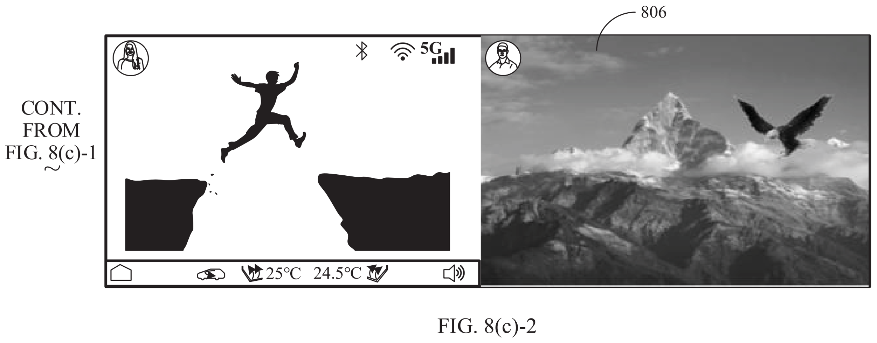

Technical solutions in embodiments of this application may be further applied to a scenario in which the vehicle-mounted display is a long screen (or may be referred to as a long connected screen). FIG. 8(a)-1 to FIG. 8(c)-2 show another group of GUIs according to an embodiment of this application.

As shown in FIG. 8(a)-1 and FIG. 8(a)-2, a central display and a front passenger screen in a vehicle cockpit may be a same screen. The screen may be divided into two display areas: an area 801 and an area 802. The area 801 may be a display area close to a driver user, and the area 802 is a display area close to a front passenger area. In the area 801, profile picture information of a user A in a driver area, a Bluetooth function icon, a Wi-Fi function icon, a cellular network signal icon, and a wallpaper 803 are displayed. In the area 802, profile picture information of a user B in the front passenger area and a wallpaper 804 are displayed.

When it is detected that the user A in the driver area gives a speech instruction 1 "Xiao A, Xiao A, help me change to a wallpaper in which white clouds surround a snow mountain", a GUI shown in FIG. 8(b)-1 and FIG. 8(b)-2 may be displayed.

As shown in FIG. 8(b)-1 and FIG. 8(b)-2, in response to the obtained speech instruction 1 given by the user A, an image 805 may be generated based on the speech instruction 1, and the area 801 is controlled to switch from displaying the wallpaper 802 to displaying the image 805. In this case, the wallpaper 804 may continue to be displayed in the area 802.

When it is detected that the user B in the front passenger area gives a speech instruction 2 "Xiao A, Xiao A, add an eagle to the image", a GUI shown in FIG. 8(c)-1 and FIG. 8(c)-2 may be displayed.

As shown in FIG. 8(c)-1 and FIG. 8(c)-2, in response to the obtained speech instruction 2 given by the user B, an image 806 may be generated based on the image 805 and the speech instruction 2, and the area 802 is controlled to switch from displaying the wallpaper 804 to displaying the image 806. In this case, the area 801 may switch from displaying the image 805 to displaying the wallpaper 803.

In this embodiment of this application, when the user B wants to edit or re-create an image by giving a speech instruction in the cockpit, the vehicle may display, based on an area in which the user B that gives the speech instruction is located, an edited or re-created image in a display area (for example, the area 802) of the area in which the user B is located, so that the user B can conveniently view the edited or re-created image, and use experience of the user can be improved.

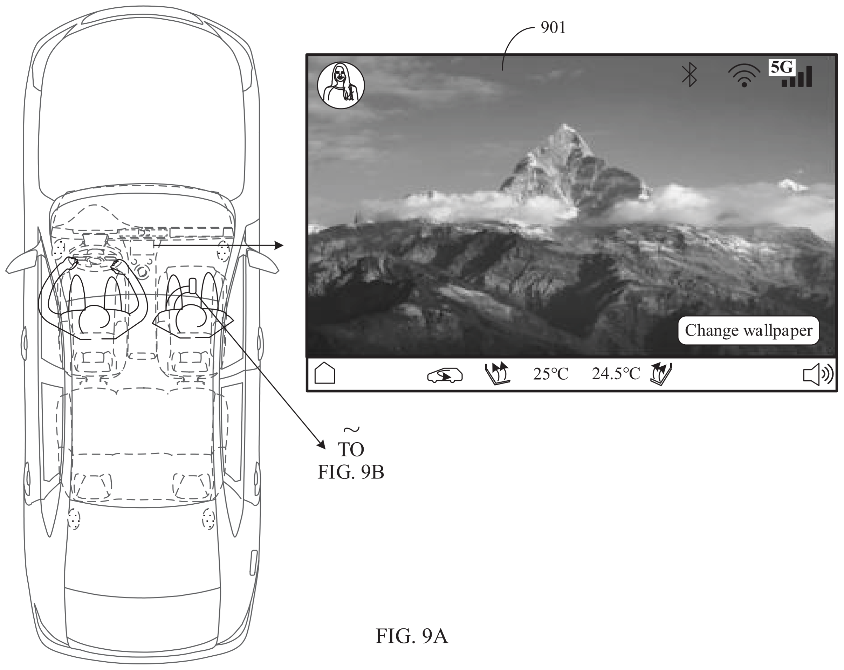

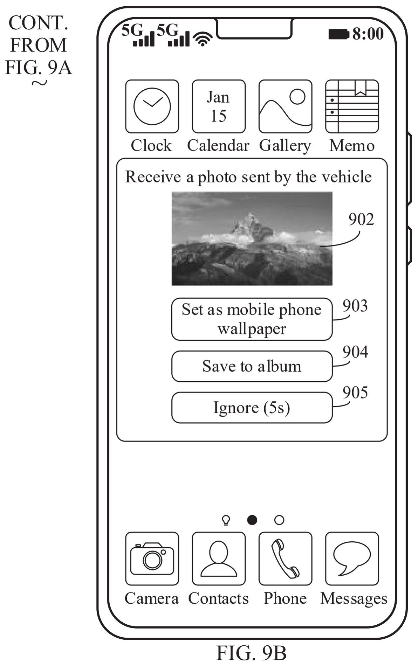

After a new image is generated based on the camera or the speech instruction acquired by the microphone, the vehicle may also send the image to a terminal device. FIG. 9A and FIG. 9B show another GUI according to an embodiment of this application.

As shown in FIG. 9A and FIG. 9B, a vehicle may display an image 901 in a content display area 301. The image 901 may be an image generated based on data acquired by a camera or a microphone in the foregoing embodiment. The vehicle may send the image 901 to a mobile phone. In response to the received image 901 sent by the vehicle, the mobile phone may display a prompt box. The prompt box includes prompt information "Receive a photo sent by the vehicle", a thumbnail 902 of the image 901, a control 903 for setting the image as a wallpaper of the mobile phone, a control 904 for storing the image to an album, and a control 905 for ignoring the image.

In an embodiment, that the vehicle may send the image 901 to the mobile phone includes: The vehicle may send the thumbnail of the image 901 to the mobile phone. In this way, information about the thumbnail of the image 901 is sent to the mobile phone, so that a delay in sending, by the vehicle, original image content of the image 901 to the mobile phone is reduced, a speed at which a user views, through the mobile phone, an image generated by the vehicle is increased, and use experience of the user can be improved. In addition, transmission resource overheads caused are also reduced when the user does not want to store the image 901 on the mobile phone.

In an embodiment, when detecting an operation of tapping the control 903 by the user, the mobile phone may replace a wallpaper with the image 901.

In an embodiment, that the mobile phone may replace the wallpaper with the image 901 when detecting the operation of tapping the control 903 by the user includes: When detecting the operation of tapping the control 903 by the user, the mobile phone may request original image content of the image 901 from the vehicle; in response to the received request sent by the mobile phone, the vehicle may send the original image content of the image 901 to the mobile phone; and in response to the received original image content of the image 901 sent by the vehicle, the mobile phone may set the original image content of the image 901 as the wallpaper of the mobile phone.

In an embodiment, the mobile phone may store the image 901 in the album of the mobile phone when detecting an operation of tapping the control 904 by the user.

In an embodiment, that the mobile phone may store the image 901 in the album of the mobile phone when detecting the operation of tapping the control 904 by the user includes: When detecting the operation of tapping the control 904 by the user, the mobile phone may request original image content of the image 901 from the vehicle; in response to the received request sent by the mobile phone, the vehicle may send the original image content of the image 901 to the mobile phone; and in response to the received original image content of the image 901 sent by the vehicle, the mobile phone may store the original image content of the image 901 in the album of the mobile phone.

In an embodiment, the vehicle and the mobile phone may establish a connection by using a short-range communication technology. The short-range communication technology includes but is not limited to a Bluetooth (Bluetooth) connection, a Wi-Fi connection, or the like. In this way, when generating the image 901, the vehicle may send the image 901 to the mobile phone by using the short-range communication technology.

In an embodiment, before sending the image 901 to the mobile phone by using the short-range communication technology, the vehicle may further determine that an account logged in to the vehicle is associated with an account logged in to the mobile phone. For example, when the account logged in to the vehicle is the same as the account logged in to the mobile phone, the image 901 may be sent to the mobile phone; or when the account logged in to the vehicle and the account logged in to the mobile phone are in a same family group, the image 901 may be sent to the mobile phone; or when the account logged in to the mobile phone is an account authorized by the vehicle, the image 901 may be sent to the mobile phone. In this way, interference caused to a stranger passenger when the image 901 is sent to a mobile phone of the stranger passenger can be avoided.

In an embodiment, the vehicle and the mobile phone may establish a connection through a cloud server. The vehicle may upload the image 901 to the cloud server, where the cloud server may be a server used by users in a family group to share information.

For example, the account logged in to the vehicle is an account 1, and the account 1 and an account 2 are in a same family group. When generating the image 901, the vehicle may upload the image 901 to the cloud server. The cloud server may send the image 901 to a device other than the vehicle 1 under the account 1, and send the image 901 to a device under the account 2.

In an embodiment, when generating the image 901, the vehicle may further upload the image 901 to a server corresponding to a wallpaper mall. In this way, another user may view the image 901 through the wallpaper application, so that the another user downloads the image 901 through the wallpaper application.

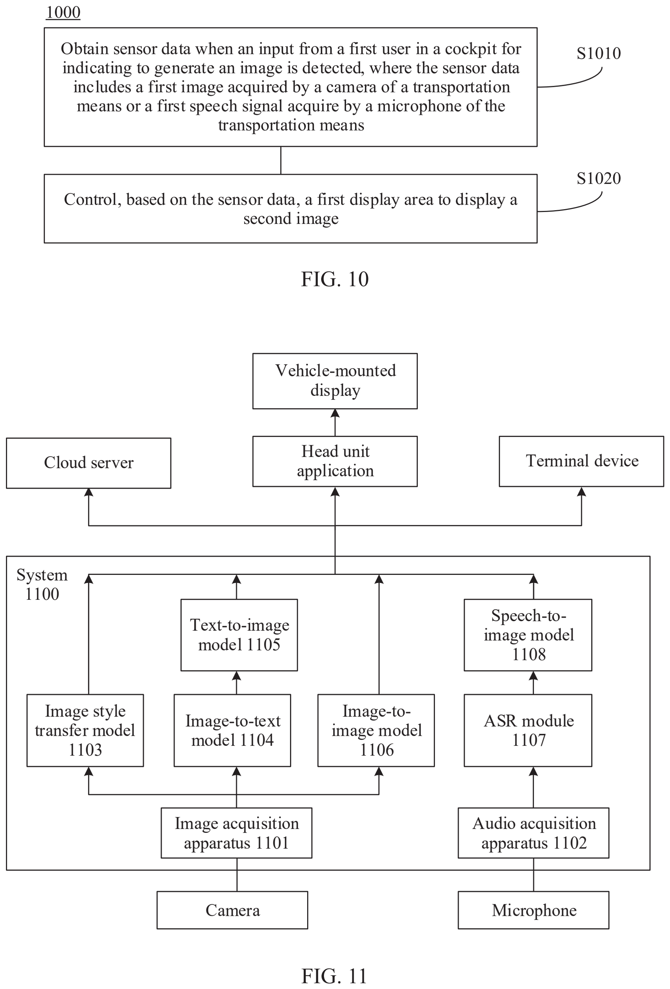

FIG. 10 is a schematic flowchart of a control method 1000 according to an embodiment of this application. The method 1000 may be performed by a transportation means (for example, a vehicle), or the method 1000 may be performed by the foregoing computing platform, or the method 1000 may be performed by a system including a computing platform and a sensor, or the method 1000 may be performed by a system-on-a-chip (system-on-a-chip, SoC) on the computing platform, or the method 1000 may be performed by a processor on the computing platform. The method 1000 includes the following steps.

S1010: Obtain sensor data when an input from a first user in a cockpit for indicating to generate an image is detected, where the sensor data includes a first image acquired by a camera of the transportation means or a first speech signal acquired by a microphone of the transportation means.

For example, as shown in FIG. 3(b), the input from the first user for indicating to generate the image may be the operation of tapping the control 3018.

For example, as shown in FIG. 4(a), the input from the first user for indicating to generate the image may be the operation of tapping the control 401.

For example, as shown in FIG. 6(a), the input from the first user for indicating to generate the image may be the operation of tapping the control 601.

For example, as shown in FIG. 8(a)-1 and FIG. 8(a)-2, the input from the first user for indicating to generate the image may be the speech instruction 1 "Xiao A, Xiao A, help me change to a wallpaper in which white clouds surround a snow mountain" given by the user.

Optionally, the camera of the transportation means includes a camera outside the cockpit of the transportation means or a camera in the cockpit.

S1020: Control, based on the sensor data, a first display area to display a second image.

Optionally, the sensor data includes the first speech signal, and controlling, based on the sensor data, the first display area to display the second image includes: controlling, based on feature information of the first speech signal, the first display area to display the second image, where the feature information of the first speech signal includes at least one of a pitch, a timbre, and a tone of the first speech signal.

For example, the vehicle may store a correspondence between feature information of a speech signal and an image style, and controlling, based on the feature information of the first speech signal, the first display area to display the second image includes: controlling, based on the feature information of the first speech signal and the correspondence, the first display area to display the second image.

For example, the correspondence may be as shown in Table 1, Table 2, Table 3, or Table 4.

Optionally, the sensor data includes the first image, and the method further includes: performing style transfer on the first image, to obtain the second image.

For example, as shown in FIG. 4(c), the first image may be the image 402, and the second image may be the image 403. The image 403 may be obtained by performing style transfer on the image 402.

Optionally, the sensor data includes the first image, and the method further includes: determining text description content based on the first image, where the text description content includes at least one of a scene, an object, a person, or an environment corresponding to the first image; and determining the second image based on the text description content.

For example, as shown in FIG. 3(c) and FIG. 3(d), the first image may be the image 3019, and the second image may be the image 3020. The transportation means may input the image 3019 into an image-to-text model, to obtain text description content corresponding to the image 3019. For example, a scene corresponding to the first image is "winter" and "outdoor", objects included in the first image are "snow mountain" and "white clouds", and an environment in the first image is "sunny". The transportation means may input the text description content corresponding to the image 3019 into a text-to-image model, to obtain the image 3020.

Optionally, the sensor data includes the first image, and the method further includes: inputting the first image into an image-to-image model, to obtain the second image.

For example, as shown in FIG. 3(c) and FIG. 3(d), the first image may be the image 3019, and the second image may be the image 3020. The transportation means may input the image 3019 into the image-to-image model, to obtain the image 3020.

Optionally, the cockpit further includes a second display area, and the method further includes: when a second speech signal from a second user in the cockpit is detected, controlling, based on the second speech signal and the second image, the second display area to display a third image, where the second display area is associated with an area in which the second user is located.

For example, as shown in FIG. 8(c)-1 and FIG. 8(c)-2, the first display area may be the area 801, and the second display area may be the area 802. When detecting the speech instruction 2 given by the user B in the front passenger area, the transportation means may generate the image 806 based on the speech instruction 2 and the image 805, and control the area 802 to display the image 806.

Optionally, before obtaining the sensor data, the method further includes: controlling the first display area to display a fourth image; and controlling, based on the sensor data, the first display area to display the second image includes: controlling, based on the fourth image and the sensor data, the first display area to switch from displaying the fourth image to displaying the second image.

For example, as shown in FIG. 7(a) to FIG. 7(c), the fourth image may be the image 701, the second image may be the image 702, and the sensor data may be the speech instruction "Xiao A, Xiao A, add an eagle to the image" given by the user. The transportation means may generate the image 702 based on the image 701 and the speech instruction, and control the content display area 301 to switch from displaying the image 701 to displaying the image 702.

Optionally, the method 1000 further includes: establishing a connection to a terminal device; and sending the second image to the terminal device.

For example, as shown in FIG. 9A and FIG. 9B, after the vehicle establishes the connection to the mobile phone, the vehicle may send the generated image 902 to the mobile phone.

Optionally, sending the second image to the terminal device includes: sending a thumbnail of the second image to the terminal device.

Optionally, before sending the second image to the terminal device, the method 1000 further includes: determining that an account logged in to the transportation means is associated with an account logged in to the terminal device.

In this way, the second image is sent after it is determined that the account logged in to the transportation means is associated with the account logged in to the terminal device, so that interference caused by the second image to a stranger passenger in the cockpit can be avoided.

Optionally, the method 1000 further includes: sending the second image to a cloud server.

For example, the cloud server may be a server used by users in a family group to share information, or the cloud server may be a server corresponding to a wallpaper application.

FIG. 11 is a block diagram of a control system 1100 according to an embodiment of this application. The control system 1100 includes an image acquisition apparatus 1101, an audio acquisition apparatus 1102, an image style transfer model 1103, an image-to-text model 1104, a text-to-image model 1105, an image-to-image model 1106, a speech recognition (automatic speech recognition, ASR) module 1107, and a speech-to-image model 1108.

The image acquisition apparatus 1101 is configured to obtain an image acquired by a camera in a cockpit and/or an image acquired by a camera outside the cockpit. The image acquisition apparatus 1101 may send the obtained image to the image style transfer model 1103, the image-to-text model 1104, or the image-to-image model 1106.

The audio acquisition apparatus 1102 is configured to obtain a speech signal acquired by a microphone. The audio acquisition apparatus 1102 is further configured to send the obtained speech signal to the speech recognition model 1107.

The image style transfer model 1103 is configured to perform style transfer on the image obtained by the image acquisition apparatus 1101, to obtain an image after style transfer.

The image-to-text model 1104 is configured to obtain corresponding text description content based on the image obtained by the image acquisition apparatus 1101. For example, the text description content includes at least one of a scene, an object, a person, or an environment corresponding to the image. The image-to-text model 1104 is further configured to send the determined text description content to the text-to-image model 1105.

The text-to-image model 1105 is configured to generate a new image based on the text description content sent by the image-to-text model 1104.

The image-to-image model 1106 is configured to generate a new image based on the image obtained by the image acquisition apparatus 1101.

The ASR module 1107 is configured to analyze the speech signal obtained by the audio acquisition apparatus 1102, and identify text content corresponding to the speech signal. The ASR module 1107 is further configured to send the recognized text content to the speech-to-image model 1108.

The speech-to-image model 1108 is configured to generate an image based on the text content sent by the ASR module 1107.

Optionally, the speech-to-image model 1108 and the text-to-image model 1105 may be a same model, or may be different models.

Optionally, the system 1100 may further include a multi-stream model. The multi-stream model is configured to obtain image information. The image information includes the image generated by the image style transfer model 1103, the image generated by the text-to-image model 1105, the image generated by the image-to-image model 1106, the image generated by the speech-to-image model 1108, or an image originally displayed on a vehicle-mounted display. The multi-stream model 1109 is further configured to receive the text content sent by the ASR module 1107. The multi-stream model may generate a new image based on the text content and the obtained image information.

Optionally, the system 1100 may send, to a head unit desktop application, the image generated by the text-to-image model 1105, the image generated by the image-to-image model 1106, the image generated by the speech-to-image model 1108, or the image generated by the multi-stream model. The head unit desktop application controls the vehicle-mounted display to display an image.

Optionally, the system 1100 may send, to a head unit application, a terminal device (for example, a mobile phone), or a cloud server, the image generated by the image style transfer model 1103, the image generated by the text-to-image model 1105, the image generated by the image-to-image model 1106, the image generated by the speech-to-image model 1108, or the image generated by the multi-stream model 1109. For example, the cloud server may be a server used by users in a family group to share information, or the cloud server may be a server corresponding to a wallpaper application.

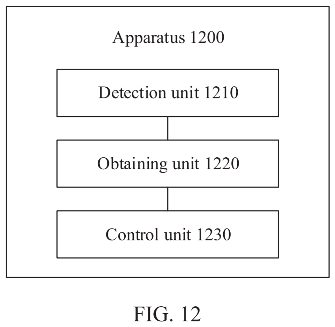

FIG. 12 is a block diagram of a control apparatus 1200 according to an embodiment of this application. As shown in FIG. 12, the apparatus 1200 includes a detection unit 1210, an obtaining unit 1220, and a control unit 1230. The obtaining unit 1220 is configured to obtain sensor data when the detection unit 1210 detects an input from a first user in a cockpit of a transportation means for indicating to generate an image, where the sensor data includes a first image acquired by a camera of the transportation means or a first speech signal acquired by a microphone of the transportation means; and the control unit 1230 is configured to control, based on the sensor data, a first display area to display a second image, where the cockpit includes the first display area.

Optionally, the sensor data includes the first speech signal, and the control unit 1230 is configured to control, based on feature information of the first speech signal, the first display area to display the second image, where the feature information of the first speech signal includes at least one of a pitch, a timbre, and a tone of the first speech signal.

Optionally, the sensor data includes the first image, and the apparatus 1200 further includes: a style transfer unit, configured to perform style transfer on the first image, to obtain the second image.

For example, functions implemented by the style transfer unit may be implemented by the image style transfer model 1103 in the foregoing system 1100.

Optionally, the sensor data includes the first image, and the apparatus 1200 further includes: a determining unit, configured to: determine text description content based on the first image, where the text description content includes at least one of a scene, an object, a person, or an environment corresponding to the first image; and determine the second image based on the text description content.

Optionally, functions implemented by the determining unit may be implemented by the image-to-text model 1104 and the text-to-image model 1105 in the foregoing system 1100.

Optionally, the sensor data includes the first image, and the apparatus 1200 further includes: an image generation unit, configured to input the first image into an image-to-image model, to obtain the second image.

For example, functions implemented by the image generation unit may be implemented by the image-to-image model 1106 in the foregoing system 1100.

Optionally, the cockpit further includes a second display area, and the control unit 1230 is further configured to: when the detection unit 1210 detects a second speech signal from a second user in the cockpit, control, based on the second speech signal and the second image, the second display area to display a third image, where the second display area is associated with an area in which the second user is located.

Optionally, the control unit 1230 is configured to: before the obtaining unit obtains the sensor data, control the first display area to display a fourth image; and control, based on the fourth image and the sensor data, the first display area to switch from displaying the fourth image to displaying the second image.

Optionally, the apparatus 1200 further includes: a connection establishment unit, configured to establish a connection to a terminal device; and a first sending unit, configured to send the second image to the terminal device.

Optionally, the apparatus 1200 further includes: a second sending unit, configured to send the second image to a cloud server.

For example, the detection unit 1210 may be the computing platform in FIG. 1, or a processing circuit, a processor, or a controller on the computing platform in FIG. 1. For example, the detection unit 1210 is the processor 151 on the computing platform. The processor 151 may obtain data acquired by a touch sensor on the vehicle-mounted display, and determine, based on the data, that the input from the first user in the cockpit for indicating to generate the image is detected.

For another example, the obtaining unit 1220 may be the computing platform in FIG. 1, or a processing circuit, a processor, or a controller on the computing platform in FIG. 1. For example, the obtaining unit 1220 is the processor 152 on the computing platform. The processor 152 may obtain the sensor data when the processor 151 determines that the input from the first user in the cockpit for indicating to generate the image is detected. For example, the processor 152 may control a camera outside the cockpit to turn on and obtain the first image acquired by the camera outside the cockpit. Alternatively, the processor 152 may control a microphone in the cockpit to turn on and obtain the speech signal acquired by the microphone.

For another example, the control unit 1230 may be the computing platform in FIG. 1, or a processing circuit, a processor, or a controller on the computing platform in FIG. 1. For example, the control unit 1230 is the processor 153 on the computing platform, and the processor 153 may generate the second image based on the sensor data. For example, the processor 153 may store the image style transfer model 1103; or the processor 153 may store the image-to-text model 1104 and the text-to-image model 1105; or the processor 153 may store the image-to-image model 1106; or the processor 153 may store the ASR module 1107 and the speech-to-image model 1108.

Functions implemented by the detection unit 1210, functions implemented by the obtaining unit 1220, and functions implemented by the control unit 1230 may be implemented by different processors, or may be implemented by a same processor, or some functions may be implemented by a same processor. This is not limited in embodiments of this application.

It should be understood that division into the units in the apparatus is merely logical function division. During actual implementation, all or some of the units may be integrated into one physical entity or may be physically separated. In addition, the units in the apparatus may be implemented in a form of software invoked by the processor. For example, the apparatus includes a processor, the processor is connected to a memory, the memory stores instructions, and the processor invokes the instructions stored in the memory, to implement any one of the foregoing methods or implement functions of each unit of the apparatus. The processor is, for example, a general purpose processor, such as a CPU or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. Using an FPGA as an example, the hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by a processor, or all units may be implemented in a form of a hardware circuit, or some units may be implemented in a form of software invoked by a processor, and a remaining part may be implemented in a form of a hardware circuit.

Each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units in the foregoing apparatus may be integrated, or may be independently implemented. In an implementation, these units are integrated and implemented in a form of a SoC. The SoC may include at least one processor, configured to implement any one of the foregoing methods or implement functions of the units of the apparatus. Types of the at least one processor may be different. For example, the at least one processor includes a CPU and an FPGA, a CPU and an artificial intelligence processor, or a CPU and a GPU.

An embodiment of this application further provides a control apparatus, where the apparatus includes a processing unit and a storage unit. The storage unit is configured to store instructions, and the processing unit executes the instructions stored in the storage unit, so that the apparatus is enabled to perform the control method performed in the foregoing embodiments.

Optionally, if the apparatus is located in a transportation means, the processing unit may be the processors 151 to 15n in FIG. 1.

An embodiment of this application further provides a control system. The control system may include a computing platform and a display apparatus. The computing platform may include the foregoing control apparatus 1200.

For example, the display apparatus may include a vehicle-mounted display, for example, one or more of the display 201, the display 202, the display 203, or the display 204 in FIG. 2.

Optionally, the transportation means may further include a sensor, for example, a camera or a microphone.

An embodiment of this application further provides a transportation means, where the transportation means may include the foregoing control apparatus 1200 or the foregoing control system.

An embodiment of this application further provides a computer program product, where the computer program product includes computer program code. When the computer program code is run on a computer, the computer is enabled to perform the control method in the foregoing embodiments.

An embodiment of this application further provides a computer-readable medium, where the computer-readable medium stores program code. When the computer program code is run on a computer, the computer is enabled to perform the control method in the foregoing embodiments.

An embodiment of this application further provides a chip, where the chip includes a circuit, and the circuit is configured to perform the control method in the foregoing embodiments.

In an implementation process, steps in the foregoing methods may be completed by using an integrated logic circuit of hardware in the processor or by using instructions in a form of software. The method disclosed with reference to embodiments of this application may be directly performed by a hardware processor, or may be performed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps of the foregoing method in combination with hardware of the processor. To avoid repetition, details are not described herein again.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, wherein the method is applied to a cockpit of a transportation means, the cockpit comprises a first display area, and the method comprises:
obtaining sensor data when an input from a first user in the cockpit for indicating to generate an image is detected, wherein the sensor data comprises a first image acquired by a camera of the transportation means or a first speech signal acquired by a microphone of the transportation means; and
controlling, based on the sensor data, the first display area to display a second image.

2. The method according to claim 1, wherein the sensor data comprises the first speech signal, and controlling, based on the sensor data, the first display area to display the second image comprises:
controlling, based on feature information of the first speech signal, the first display area to display the second image, wherein
the feature information of the first speech signal comprises at least one of a pitch, a timbre, and a tone of the first speech signal.

3. The method according to claim 1, wherein the sensor data comprises the first image, and the method further comprises:
performing style transfer on the first image, to obtain the second image.

4. The method according to claim 1, wherein the sensor data comprises the first image, and the method further comprises:
determining text description content based on the first image, wherein the text description content comprises at least one of a scene, an object, a person, or an environment corresponding to the first image; and
determining the second image based on the text description content.

5. The method according to claim 1, wherein the sensor data comprises the first image, and the method further comprises:
inputting the first image into an image-to-image model, to obtain the second image.

6. The method according to any one of claims 1 to 5, wherein the cockpit further comprises a second display area, and the method further comprises:
when a second speech signal from a second user in the cockpit is detected, controlling, based on the second speech signal and the second image, the second display area to display a third image, wherein the second display area is associated with an area in which the second user is located.

7. The method according to any one of claims 1 to 6, wherein before obtaining the sensor data, the method further comprises:
controlling the first display area to display a fourth image; and
controlling, based on the sensor data, the first display area to display the second image comprises:
controlling, based on the fourth image and the sensor data, the first display area to switch from displaying the fourth image to displaying the second image.

8. The method according to any one of claims 1 to 7, wherein the method further comprises:
establishing a connection to a terminal device; and
sending the second image to the terminal device.

9. The method according to any one of claims 1 to 8, wherein the method further comprises:
sending the second image to a cloud server.

10. A control apparatus, wherein the apparatus comprises a detection unit, an obtaining unit, and a control unit, wherein
the obtaining unit is configured to obtain sensor data when the detection unit detects an input from a first user in a cockpit of a transportation means for indicating to generate an image, wherein the sensor data comprises a first image acquired by a camera of the transportation means or a first speech signal acquired by a microphone of the transportation means; and
the control unit is configured to control, based on the sensor data, a first display area to display a second image, wherein the cockpit comprises the first display area.

11. The apparatus according to claim 10, wherein the sensor data comprises the first speech signal, and the control unit is configured to:
control, based on feature information of the first speech signal, the first display area to display the second image, wherein
the feature information of the first speech signal comprises at least one of a pitch, a timbre, and a tone of the first speech signal.

12. The apparatus according to claim 10, wherein the sensor data comprises the first image, and the apparatus further comprises:
a style transfer unit, configured to perform style transfer on the first image, to obtain the second image.

13. The apparatus according to claim 10, wherein the sensor data comprises the first image, and the apparatus further comprises:
a determining unit, configured to determine text description content based on the first image, wherein the text description content comprises at least one of a scene, an object, a person, or an environment corresponding to the first image; and
determine the second image based on the text description content.

14. The apparatus according to claim 10, wherein the sensor data comprises the first image, and the apparatus further comprises:
an image generation unit, configured to input the first image into an image-to-image model, to obtain the second image.

15. The apparatus according to any one of claims 10 to 14, wherein the cockpit further comprises a second display area, and the control unit is further configured to:
when the detection unit detects a second speech signal from a second user in the cockpit, control, based on the second speech signal and the second image, the second display area to display a third image, wherein the second display area is associated with an area in which the second user is located.

16. The apparatus according to any one of claims 10 to 15, wherein the control unit is configured to:
before the obtaining unit obtains the sensor data, control the first display area to display a fourth image; and
control, based on the fourth image and the sensor data, the first display area to switch from displaying the fourth image to displaying the second image.

17. The apparatus according to any one of claims 10 to 16, wherein the apparatus further comprises:
a connection establishment unit, configured to establish a connection to a terminal device; and
a first sending unit, configured to send the second image to the terminal device.

18. The apparatus according to any one of claims 10 to 17, wherein the apparatus further comprises:
a second sending unit, configured to send the second image to a cloud server.

19. A control apparatus, comprising:
a memory, configured to store a computer program; and
a processor, configured to execute the computer program stored in the memory, to enable the apparatus to perform the control method according to any one of claims 1 to 9.

20. A control system, comprising a display apparatus and a computing platform, wherein the computing platform comprises the control apparatus according to any one of claims 10 to 19.

21. A transportation means, comprising the control apparatus according to any one of claims 10 to 19, or comprising the control system according to claim 20.

22. The transportation means according to claim 21, wherein the transportation means is a vehicle.

23. A computer-readable storage medium, wherein the computer-readable storage medium stores a computer program, and when the computer program is executed by a computer, the computer is enabled to perform the control method according to any one of claims 1 to 9.

24. A chip, wherein the chip comprises a processor and a data interface, and the processor reads, through the data interface, instructions stored in a memory, to perform the control method according to any one of claims 1 to 9.
